# EUROPÄISCHE PATENTANMELDUNG

(11) **EP 4 407 289 A1**
(43) Veröffentlichungstag der Anmeldung: **31.07.2024**
(21) Anmeldenummer: 24153608.5
(22) Anmeldetag: 24.01.2024
(51) Int. Cl.: G01L 5/28, G05B 9/03

(54) **VORRICHTUNG UND VERFAHREN ZUR BREMSLEISTUNGSÜBERWACHUNG**

(30) Priorität: 27.01.2023 DE 102023102076
(71) Anmelder: Pilz GmbH & Co. KG, 73760 Ostfildern (DE)
(72) Erfinder: Bode, Holger, 73760 Ostfildern (DE); Jäger, Reimund, 73760 Ostfildern (DE)
(74) Vertreter: Witte, Weller & Partner Patentanwälte mbB

(57) **Zusammenfassung**

Vorrichtung (10) zur Bremsleistungsüberwachung und sicherheitstechnischen Verriegelung, insbesondere Abschaltung, eines Antriebs (22) einer technischen Anlage (12) mit zwei zueinander beweglichen Maschinenteilen (16, 18), die durch den Antrieb (22) in einem definierten Betätigungsintervall aufeinander zubewegt werden. Die Vorrichtung weist eine erste Steuerung (36) auf mit einem Eingang (40) zum Aufnehmen eines Gebersignals eines mit einer Antriebswelle (24) des Antriebs (22) gekoppelten Gebers (50) und mit einem Ausgang (44) zum Bereitstellen eines Fehlersignals, insbesondere eines Abschaltsignals zum Stillsetzen des Antriebs. Die erste Steuerung (36) bestimmt aus dem Gebersignal einen Wert für eine Beschleunigung, wenn eine mit der Antriebswelle (24) gekoppelte Bremse (14) mit ihrer größtmöglichen Bremskraft auf die Antriebswelle (24) des Antriebs (22) wirkt, und verriegelt den Antrieb (22) sicherheitstechnisch, wenn der bestimmte Wert einen in der ersten Steuerung (36) hinterlegten Grenzwert passiert.

## Beschreibung

Die vorliegende Erfindung betrifft eine Vorrichtung zur Bremsleistungsüberwachung und sicherheitstechnischen Verriegelung, insbesondere Abschaltung, eines Antriebs einer technischen Anlage mit zwei zueinander beweglichen Maschinenteilen, die durch den Antrieb in einem definierten Betätigungsintervall aufeinander zubewegt werden. Ferner betrifft die Erfindung ein entsprechendes Verfahren.

Technische Anlagen dieser Art sind insbesondere Werkzeugmaschinen zum Umformen von Werkstücken, wie bspw. Biegepressen, Abkantpressen, Stanzmaschinen oder Schneidmaschinen, bei denen zwei Maschineteile aufeinander zubewegt werden, um ein zwischen den Maschinenteilen eingelegtes Werkstück zu verformen. Es versteht sich, dass von solchen Maschinen eine hohe Gefahr für das Bedienpersonal ausgehen kann, insbesondere dann, wenn Einlegearbeiten, d.h., Eingriffe ins Werkzeug, um Rohteile einzulegen bzw. Fertigteile zu entnehmen, durch das Personal manuell durchgeführt werden.

Für den sicheren Betrieb technischer Anlagen dieser Art sind somit verschiedene Anforderungen zu erfüllen, die durch die zuständigen Behörden normativ festgelegt werden. Für komplexe technische Anlagen sind hierfür in der Regel die Anforderungen verschiedener Einzelnormen zu berücksichtigen, um eine umfassende Absicherung zu gewährleisten. In Europa bspw. ist für jede Maschine grundsätzlich die Norm DIN EN ISO 12100 "Sicherheit von Maschinen" anzuwenden, die allgemeine Gestaltungsleitsätze für Maschinen sowie zur Risikobeurteilung und Risikominderung beinhaltet. Für Pressen im Speziellen sind weitere Einzelnormen zu berücksichtigen, die konkrete Sicherheitsanforderungen festlegen, wie im Falle von Exzenterpressen bspw. die Norm DIN EN ISO 16092-2. Ferner ist für eine sichere Steuerung der Maschinen ergänzend die Einzelnorm DIN EN ISO 13849-1 "Sicherheitsbezogene Teile von Steuerungen" heranzuziehen, die weitere, konkrete Anforderungen für Pressen im Automatikbetrieb vorsieht.

Eine konkrete Sicherheitsanforderung ist bei Pressen bspw. die kontinuierliche Überwachung der Leistung der Betriebsbremse. Bei ordnungsgemäßem Betrieb soll eine Presse am Ende eines Arbeitszyklus (Betätigungsintervall) im oberen Totpunkt (OTP), normalerweise eine 0°-Stellung einer Antriebsachse, stehenbleiben, wobei ein definierter Nachlauf (verspätetes Halten) erlaubt ist, bspw. ein Nachlauf von 15°. Überschreitet die Presse den normativ festgelegten Nachlauf, muss die Presse sicherheitstechnisch verriegelt werden.

Aufgrund von Leistungssteigerungen bei modernen Pressen, insbesondere im Hinblick auf die Anzahl von Hüben pro Minute, ist eine Messung des Nachlaufs nicht immer praktikabel durchführbar oder die in den Normen genannten Maßnahmen nicht zuverlässig genug, um eine tatsächliche Verschlechterung der Betriebsbremse effektiv zu erkennen.

Bspw. ist bei einigen Pressen eine Überwachung am Ende eines jeden Betätigungsintervalls messtechnisch nicht möglich, sondern nur beim Anhalten der Presse. Ferner ist normativ eine Überwachung nur bei einem Halt der Presse im OTP beschrieben, jedoch kann die Presse bei anderen Betriebsarten, wie bspw. bei der Einrichtung, auch an anderer Stelle als dem OTP halten.

Darüber hinaus kommen aufgrund der hohen Zykluszahlen moderner Maschinen anstelle der klassischen Nockenwellen, elektronische Nockenschaltwerke zum Einsatz, die prinzipbedingt keine Nachlaufüberwachung im klassischen Sinne erlauben. Ferner können bei hohen Geschwindigkeiten Werte von Gebern nur noch durch sehr schnelle Steuerungen erfasst und verarbeitet werden und nicht, wie vorgeschrieben, durch spezielle Sicherheitsteuerungen, die aufgrund ihrer sicherheitstechnischen Einrichtungen, eine geringere Verarbeitungsgeschwindigkeit aufweisen als Standardsteuerungen ohne diese Einrichtungen. Bekannte Schutzeinrichtungen können daher nicht ohne Weiteres für moderne Pressen adaptiert werden.

Steuerungen von Pressen sind zudem oftmals eingerichtet, einen Abschaltpunkt der Bremse, d.h., einen Vorlaufwinkel an die jeweilige Geschwindigkeit anzupassen. Damit eine Presse bspw. genau im OTP stoppt, kann eine Steuerung bei jedem Stopp im OTP eine Abweichung zum OTP bestimmten und basierend hierauf den Abschaltwinkel der Bremse, d.h. den Vorlaufwinkel, korrigieren, damit bei einem nächsten Stopp die Presse wieder im OTP hält. Die dynamische Anpassung des Abschaltwinkels verhindert jedoch, dass ein langsamer Verschleiß der Bremse über eine Nachlaufüberwachung erkannt werden kann.

Problematisch ist ferner, dass die in der Norm DIN EN ISO 16092-2 beschriebene Überwachungsmethode nicht die Gesamtanhaltezeit der Presse, die für den Sicherheitsabstand vor allem beim Einsatz einer berührungsloswirkenden Schutzeinrichtung (BWS), wie bspw. bei einem Lichtvorhang, zu beachten ist, berücksichtigt. Dies wäre für eine umfassende Sicherheitsbetrachtung jedoch wünschenswert.

Darüber hinaus können weitere Gegebenheiten die Gesamtanhaltezeit beeinflussen, wie bspw. der herrschende Luftdruck, der Auswirkungen auf die Entlüftungszeit eines Bremszylinders hat und damit die Gesamtanhaltezeit verändern kann. Diese Gegebenheiten können Einfluss auf die Gesamtanhaltezeit und den damit verbundenen Maschinennachlaufen haben, ohne dass diese Gegebenheiten mit der eigentlichen Bremsleitung der Bremse in einem Zusammenhang stehen.

Schließlich ist der normativ geforderte maximale Nachlaufwinkel (bspw. 15°) auf die maximale Geschwindigkeit der Presse bezogen. Geringere Geschwindigkeiten als die maximale Geschwindigkeit ergeben bei gleichem Verschleiß einen kleineren Nachlauf. Dies bedeutet, dass ein bei hoher Geschwindigkeit kritischer Bremsverschleiß bei niedrigeren Geschwindigkeiten nicht durch eine Nachlauchüberwachung erkannt werden kann.

Vor diesem Hintergrund ist es eine Aufgabe der vorliegenden Erfindung, eine verbesserte Vorrichtung der eingangsgenannten Art anzugeben, die die vorstehenden Probleme berücksichtigt und vermeidet. Insbesondere ist es eine Aufgabe, eine Vorrichtung der eingangsgenannten Art anzugeben, die eine zuverlässige und unbeeinflusste Überwachung einer Bremsleistung ermöglicht. Ferner ist es eine Aufgabe der vorliegenden Erfindung, eine Vorrichtung anzugeben, die eine sicherheitstechnische Verriegelung zuverlässig gewährleisten kann, insbesondere bei Maschinen mit großer Hub- und/oder Zykluszahl.

Gemäß einem Aspekt der vorliegenden Erfindung wird diese Aufgabe gelöst durch eine Vorrichtung zur Bremsleistungsüberwachung und sicherheitstechnischen Verriegelung, insbesondere Abschaltung, eines Antriebs einer technischen Anlage mit zwei zueinander beweglichen Maschinenteilen, die durch den Antrieb in einem definierten Betätigungsintervall aufeinander zubewegt werden, aufweisend: eine erste Steuerung mit einem Eingang zum Aufnehmen eines Gebersignals eines mit einer Antriebswelle des Antriebs gekoppelten Gebers und mit einem Ausgang zum Bereitstellen eines Fehlersignals, insbesondere eines Abschaltsignals zum Stillsetzen des Antriebs, wobei die erste Steuerung dazu eingerichtet ist, aus dem Gebersignal einen Wert für eine Beschleunigung zu bestimmen, wenn eine mit der Antriebswelle gekoppelte Bremse mit größtmöglicher Bremskraft auf die Antriebswelle des Antriebs wirkt, sowie den Antrieb sicherheitstechnisch zu verriegeln, wenn der bestimmte Wert einen in der ersten Steuerung hinterlegten Grenzwert passiert.

Gemäß einem weiteren Aspekt der vorliegenden Erfindung wird die Aufgabe ferner gelöst durch ein Verfahren zur Bremsleistungsüberwachung und sicherheitstechnischen Verriegelung, insbesondere Abschaltung, eines Antriebs einer technischen Anlage mit zwei zueinander beweglichen Maschinenteilen, die durch den Antrieb in einem definierten Betätigungsintervall aufeinander zubewegt werden, aufweisend:
- Aufnehmen eines Gebersignals eines mit einer Antriebswelle des Antriebs gekoppelten Gebers an einem Eingang einer ersten Steuerung;
- Bereitstellen eines Fehlersignals, insbesondere eines Abschaltsignals zum Stillsetzen des Antriebs, an einem Ausgang der ersten Steuerung in Abhängigkeit einer Verarbeitung des Gebersignals durch die erste Steuerung,
wobei die erste Steuerung aus dem Gebersignal einen Wert für eine Beschleunigung bestimmt, wenn eine mit der Antriebswelle gekoppelte Bremse mit größtmöglicher Bremskraft auf die Antriebswelle des Antriebs wirkt, sowie den Antrieb sicherheitstechnisch verriegelt, wenn der bestimmte Wert einen in der Steuerung hinterlegten Grenzwert passiert.

Es ist somit eine Idee der vorliegenden Erfindung, eine sicherheitstechnische Verriegelung eines Antriebs einer technischen Anlage, wie bspw. einer Presse oder einer Stanzmaschine, durch eine Überwachung der tatsächlichen Bremsleistung zu bewirken. Dies bedeutet, dass ein Schwellwert für die Verriegelung des Antriebs und/oder der Maschine nicht auf einen Nachlaufwinkel bezogen ist, sondern auf einen Wert oder eine Funktion, die die tatsächliche Bremsleistung repräsentieren.

Die Steuerung kann die tatsächliche Bremsleistung bestimmen, indem sie Positionswerte (Winkelpositionen) eines Gebers, der mit der Antriebswelle des Antriebs gekoppelt ist, empfängt und aus den empfangenen Positionswerten über die erste Ableitung die Geschwindigkeit der Antriebswelle und über die zweite Ableitung deren Beschleunigung bestimmt. Eine negative Beschleunigung bedeutet hierbei das die Antriebswelle gebremst wird.

Unter der Annahme, dass in einem definierten Zeitraum eine auf die Antriebswelle wirkende Bremse mit der ihr zur Verfügung stehenden größten Bremskraft wirkt, entspricht die ermittelte (negative) Beschleunigung unmittelbar der Bremsleistung der Bremse. Üblicherweise erfolgt bei mechanischen Pressen die Bremsung immer mit der maximal möglichen Bremskraft, da sie ausschließlich von der Kraft eines Federpakets in der Bremse bestimmt wird. Mit anderen Worten entspricht bei einer mechanischen Presse der definierte Zeitraum, in dem die zugehörige Bremse mit ihrer maximalen Bremskraft wirkt, dem Zeitraum, in dem eine negative Beschleunigung der Antriebswelle gemessen wird. Betrachtet man folglich bei einer mechanischen Presse die Geschwindigkeit aufgetragen über die Zeit, stellt sich der Bremsvorgang als abfallende Rampe dar, deren negative Steigung der tatsächlichen Bremsleistung der Bremse entspricht. Basierend auf dem Wert für die tatsächliche Bremsleistung kann eine sicherheitstechnische Verriegelung des Antriebs bewirkt werden, falls die tatsächliche Bremsleistung unter einen definierten Wert absinkt. Als Auslöser einer sicherheitstechnischen Verriegelung des Antriebs kann somit nicht ein Nachlaufwinkel herangezogen werden, sondern eine minimale Bremsrampe definiert werden, deren Unterschreiten überwacht wird und, wenn nötig, die Verriegelung auslöst.

Die sicherheitstechnische Verriegelung gemäß der vorliegenden Offenbarung ist somit unmittelbar an die tatsächliche Bremsleistung geknüpft und nicht an einen aus der Bremsleistung hergeleiteten Wert, wie bspw. einen Nachlaufwinkel, der noch von einer Vielzahl weiterer Faktoren abhängen kann. Bspw. ist die gemäß der vorliegenden Offenbarung bestimmte Bremsleistung unabhängig von einem herrschenden Luftdruck, da dieser nur beim Öffnen der Bremse (Entlüften der Zylinder) relevant ist und damit zwar den Nachlauf beeinflusst, nicht jedoch die tatsächliche Bremsleistung.

Bei der vorgeschlagenen Überwachung der tatsächlichen Bremsleistung kommt es auch nicht darauf an, zu welchem Zeitpunkt in einem Betätigungsintervall die Bremse betätigt wird, da die Überwachung nicht in Bezug auf einen spezifischen Ort, wie bspw. dem OTP, durchgeführt wird, sondern allein auf den Bremsvorgang abstellt. Eine Überwachung ist daher auch dann möglich, wenn die Maschine in einer anderen Betriebsart gefahren wird, die einen Halt an einer anderen Stelle als dem OTP vorsieht, bspw. bei der Einrichtung oder Wartung der Maschine. Gemäß der vorgeschlagenen Überwachung kann eine sicherheitstechnische Verriegelung auch bei diesen Betriebsarten erfolgen, sollte die Bremsleistung unter einen bestimmten Schwellwert absinken. Damit wird das Bedienpersonal auch bei diesen Betriebsarten effektiv gegen mögliche Folgen einer verminderten Bremsleistung geschützt.

Die vorgeschlagene Vorrichtung zur sicherheitstechnischen Verriegelung eines Antriebs ermöglicht somit die normativ geforderte Überwachung der Leistung einer Bremse des Antriebs und ist dabei gleichzeitig flexibler und vielseitiger anwendbar als andere Überwachungsvorrichtungen, die allein auf eine Nachlaufüberwachung abstellen. Die eingangsgenannte Aufgabe ist damit vollständig gelöst.

In einer weiteren Ausgestaltung kann die Steuerung dazu eingerichtet sein, eine Differenz zwischen dem bestimmten Wert für die Beschleunigung und dem hinterlegten Grenzwert zu bestimmen.

Gemäß dieser Ausgestaltung ist es möglich, zusätzlich zu der Verrieglung eine Verschleißkontrolle der Bremse einzurichten. Denkbar ist bspw., einen weiteren Schwellwert zu hinterlegen und mit der ermittelten Differenz abzugleichen, um eine verminderte Bremsleistung zu erkennen und rechtzeitig eine Wartung oder einen Austausch der Bremse vorzunehmen. Da die Vorrichtung die tatsächliche Bremsleistung ermittelt und keinen daraus abgeleiteten Wert, wird ein Verschleiß auch nur dann angezeigt, wenn die Bremse tatsächlich nicht mehr die ausreichende Leistung hat. Die Wartung und Instandsetzung der Bremse wird dadurch effektiver und effizienter.

In einer weiteren Ausgestaltung kann die erste Steuerung ferner dazu eingerichtet sein, einen oder mehrere weitere Parameter der technischen Anlage oder der ersten Steuerung zu bestimmen, um eine Gesamtanhaltezeit zu ermitteln.

Gemäß dieser Ausgestaltung ermittelt die Steuerung mindestens einen weiteren Parameter, um eine Gesamtanhaltezeit zu bestimmen. Die Gesamtanhaltezeit bezeichnet, die Zeit, die von einer Signalisierung eines Halts bis zum tatsächlichen Stillstand des anzuhaltenden Teils benötigt wird. Die Gesamtanhaltezeit ist insbesondere für die Dimensionierung berührungsloswirkender Schutzeinrichtungen relevant. Die von der Vorrichtung bestimmte Bremsleistung ist ein Faktor, der die Gesamtanhaltezeit beeinflussen kann. Weitere Parameter, die zusätzlich gemäß der bevorzugten Ausgestaltung erfasst werden können, sind bspw. eine Signallaufzeit eines Stoppsignals oder eine Schaltzeit eines Bremsventils. Durch die individuelle Erfassung der für die Gesamtanhaltezeit relevanten Parameter kann eine präzisere Bestimmung der Gesamtanhaltezeit erfolgen und eine differenziertere Aussage über mögliche Gründe für eine verlängerte Gesamtanhaltezeit getroffen werden.

In einer weiteren Ausgestaltung kann die Vorrichtung eine zweite Steuerung aufweisen, die mit der ersten Steuerung koppelbar ist, um Maßnahmen zur Fehlererkennung durchzuführen.

Gemäß dieser Ausgestaltung kann die Vorrichtung folglich zwei Steuerungen aufweisen. Die erste Steuerung kann den Prozess steuern und die für die Bremsleistungsüberwachung relevanten Werte von dem Geber aufnehmen und auswerten. Die zweite Steuerung kann eine Absicherung der Funktionsfähigkeit der von der ersten Steuerung durchgeführten Überwachung durchführen. Die Aufteilung der Aufgaben auf zwei Steuerungen hat den Vorteil, dass die Steuerungen jeweils für die eigene Aufgabe entsprechend hergerichtet sein können. Bei der ersten Steuerung kann es sich bspw. um eine schnelle Standardsteuerung (ST-Steuerung) handeln, die eine Winkelposition pro Millisekunde von einem Geber aufnehmen und entsprechend verarbeiten kann. Die zweite Steuerung kann eine Sicherheitssteuerung (Failsafe-(FS)-Steuerung) sein, die mit einer geringeren Verarbeitungsgeschwindigkeit wie die erste Steuerung arbeitet, dafür aber fehlersichere Einrichtungen aufweisen kann, die eine fehlersichere Verarbeitung ermöglichen. Die fehlersicheren Einrichtungen können eine mehrkanalig redundante Datenverarbeitung beinhalten sowie zyklische Selbsttests oder dergleichen. Die Ausgestaltung mit zwei Steuerungen ermöglicht es auch bei sehr schnellen Anlagen mit sehr kurzen Betätigungsintervallen, eine Bremsleistung effektiv und fehlersicher zu überwachen. Es versteht sich, dass die beiden Steuerungen auch als eine Gesamtsteuerung in einem Gehäuse ausgebildet sein können, wobei die unterschiedlichen Aufgaben von funktional getrennten Einheiten ausgeführt werden, wobei mindestens eine Einheit, die der ersten Steuerung entspricht, eine Standardeinheit ist und eine zweite Einheit, die der zweiten Steuerung entspricht, eine FS-Einheit ist.

Die angeführten Maßnahmen zur Fehlererkennung durch die zweite (FS-)Steuerung können mindestens einen zyklischen Test einer Grenzwerterkennung der ersten Steuerung beinhalten.

Ein Versagen der Grenzwerterkennung, d.h., ein Versagen beim Vergleich des bestimmten Werts mit dem hinterlegten Wert und bei der Ausführung der darauf basierenden Reaktion, muss zuverlässig und fehlersicher erkannt werden. Dies kann erreicht werden, indem die Grenzwerterkennung zyklisch getestet wird.

In einer weiteren Ausgestaltung kann die zweite Steuerung hierfür eingerichtet sein, zyklisch ein Signal an die erste Steuerung zu senden, worauf die erste Steuerung den hinterlegten Grenzwert durch eine definierte Rechenvorschrift so verändert, dass die erste Steuerung ein Übertreten des Grenzwerts annimmt.

Gemäß dieser Ausgestaltung führt die zweite Steuerung somit einen Test zur Grenzwerterkennung der ersten Steuerung durch, indem sie der ersten Steuerung in definierten Abständen ein Testsignal sendet und daraufhin eine Reaktion der ersten Steuerung beobachtet. Bleibt die Reaktion aus, insbesondere das Ausschalten eines definierten Ausgangs der ersten Steuerung, kann die zweite Steuerung die sicherheitstechnische Verriegelung der technischen Anlage veranlassen. Die erste Steuerung kann eingerichtet sein, die definierte Reaktion in Abhängigkeit des Testsignals auszuführen, indem sie nach Empfang des Testsignals durch eine Berechnung, d.h., nicht durch einen tatsächlichen Ersatz des hinterlegen Werts, den gespeicherte Grenzwert so verschiebt, dass dieser als überschritten interpretiert wird, woraufhin bspw. ein Ausgang der ersten Steuerung geschaltet wird. Der Test wird zyklisch durchgeführt, wobei ein Abstand zwischen den einzelnen Tests (Testintervall) größer sein kann als der Abstand zwischen zwei Betätigungen der zueinander beweglichen Maschineteile (Betätigungsintervall). Gemäß dieser Ausgestaltung kann die erste Steuerung effektiv durch eine zweite Steuerung getestet werden, um insgesamt den Anforderungen hoher Schutzkategorien, bspw. den Sicherheitsanforderung PLc Kat.2 der Norm EN ISO 13849-1, zu genügen.

In einer bevorzugten Ausgestaltung kann die zweite Steuerung mehrkanalig, redundant ausgebildet sein, insbesondere mit zwei zueinander redundanten Verarbeitungseinheiten, die zwei unabhängige Verarbeitungskanäle bereitstellen.

Gemäß dieser Ausgestaltung ist die zweite Steuerung somit eine Sicherheitssteuerung, die über Maßnahmen verfügt, um eine fehlersichere Aufnahme, Verarbeitung und Ausgabe von Steuerungs- /Prozessdaten zu gewährleisten. Mit einer solchen Steuerung lassen sich insbesondere fehlersichere Test auf einfache Weise durchführen.

In einer weiteren Ausgestaltung kann die erste Steuerung dazu eingerichtet sein, jede Millisekunde oder weniger, mindestens eine Winkelposition der Antriebswelle als Gebersignal zu erfassen.

Gemäß dieser Ausgestaltung kann die erste Steuerung eine schnelle Steuerung sein, insbesondere eine einkanalige Steuerung, mit einer Verarbeitungseinheit, die Geberdaten pro Millisekunde oder weniger aufnehmen kann. Durch die schnelle Aufnahme und Verarbeitung der Positionsdaten in dem genannten Zeitbereich kann auch für sehr schnelle Anlagen mit sehr kurzem Betätigungsintervall eine zuverlässige Bestimmung der Geschwindigkeit und Beschleunigung mit hinreichender Präzision sichergestellt werden. Die Ausgestaltung ermöglicht es somit, auch bei sehr schnellen Anlagen, wie bspw. Exzenterpressen, die Bremsleistung zu überwachen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines Ausführungsbeispiels einer Vorrichtung zur Bremsleistungsüberwachung,
Fig. 2 eine Geschwindigkeits-Zeit-Kurve eines Bremsvorgangs, und
Fig. 3 ein Ablaufdiagramm eines Ausführungsbeispiels eines Verfahrens zur Bremsleistungsüberwachung gemäß der vorliegenden Offenbarung.

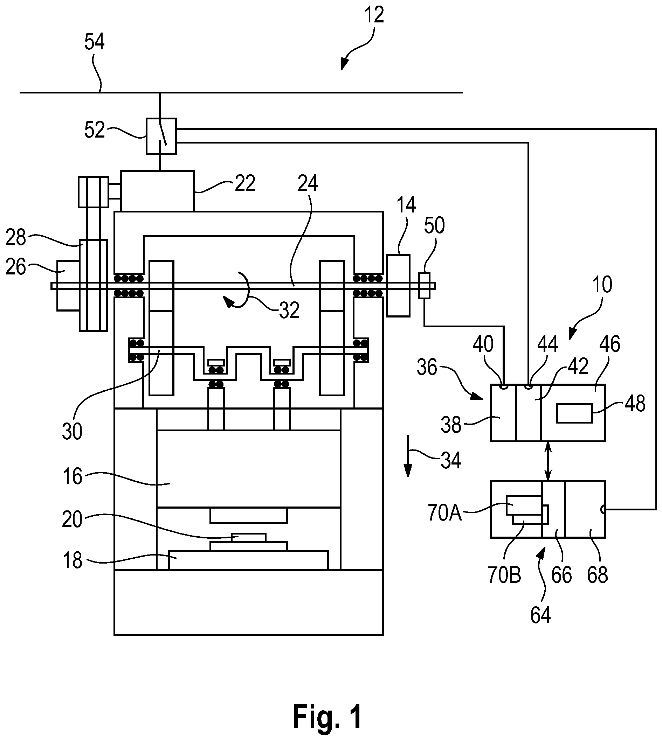

Fig. 1 zeigt eine schematische Darstellung eines Ausführungsbeispiels einer Vorrichtung zur Bremsleistungsüberwachung gemäß der vorliegenden Offenbarung. Die Vorrichtung ist hier in ihrer Gesamtheit mit der Bezugsziffer 10 bezeichnet.

Die Vorrichtung 10 ist mit einer technischen Anlage 12 gekoppelt, um eine Bremsleistung einer Bremse 14 der technischen Anlage 12 zu überwachen. Die technische Anlage 12 ist hier eine Umformungsmaschine, insbesondere Presse, bei der ein erstes Maschinenteil 16 und ein zweites Maschinenteil 18 aufeinander zubewegt werden, um ein dazwischenliegendes Werkstück 20 beim Aufeinandertreffen der Maschinenteile 16,18 zu verformen. Mindestens eines der Maschinenteile 16,18 wird hierfür durch einen Antrieb 22 in Bewegung versetzt. Der Antrieb 22 kann ein Elektromotor sein, der eine Antriebswelle 24 antreibt, beispielsweise über eine hier dargestellte Kupplung 26 und ein Schwungrad 28. Das angetriebene Maschinenteil (hier das erste Maschinenteil 16) ist mit der Antriebswelle 24 so gekoppelt, dass die rotierende Antriebswelle 24 das erste Maschinenteil 16 in eine laterale Bewegung zu dem zweiten Maschinenteil 18 versetzt. Hierfür kann die Antriebswelle 24 je nach Ausgestaltung der technischen Anlage 12 eine Kurbelwelle 30 oder eine Exzenterwelle sein, oder mit einer solchen gekoppelt werden.

Eine Drehbewegung 32 der Antriebswelle 24 steht somit in einer direkten Beziehung zu einer lateralen Bewegung 34 des ersten Maschinenteils 16 und damit in einer direkten Beziehung zu einem Betätigungsintervall der technischen Anlage 12. Das Betätigungsintervall beschreibt einen Zyklus, innerhalb dessen sich das erste Maschinenteil 16 aus einer Ausgangsposition auf das zweite Maschinenteil 18 zubewegt, mit diesem in Eingriff gebracht wird, und zurück in die Ausgangsposition kehrt. Die Ausgangsposition ist üblicherweise die Position, in der das erste Maschinenteil 16 am weitesten von dem zweiten Maschinenteil 18 entfernt ist, und wird auch als oberer Totpunkt bezeichnet. Der obere Totpunkt definiert zudem eine 0°-Stellung der Antriebswelle 24.

Die Antriebswelle 24 ist ferner mit der Bremse 14 gekoppelt. Die Bremse 14 kann die Antriebswelle 24 verzögern, insbesondere stoppen. Die Bremse 14 und die Kupplung 26 können eine Bremse-Kupplung-Kombination (BKK) sein, wobei die Erfindung nicht auf eine solche beschränkt ist. In verschiedenen Ausführungsformen kann die Bremse 14 eingerichtet sein, die Antriebswelle 24 je Betätigungsintervall einmal zu stoppen, insbesondere im oberen Totpunkt. "Stoppen" heißt in diesem Zusammenhang, die Antriebswelle 24 auf eine Geschwindigkeit von null zu reduzieren.

Die Bremse 14 kann ein Federpaket aufweisen, welches beim Aktivieren der Bremse Bremsbeläge zusammendrückt und durch die entstehende Reibung eine Bewegung der Antriebswelle 24 verzögert. Nach Aktivieren der Bremse 14 erfolgt die Verzögerung in einem solchen Fall mit maximaler Bremskraft. Es versteht sich, dass die Bremse 14 nicht auf diese spezielle Ausgestaltung beschränkt ist und Abwandlung hiervon denkbar sind. Relevant für die Bremsleistungsüberwachung ist lediglich, dass in einem definierten Zeitraum der Überwachung, die Bremse 14 mit ihrer maximalen Bremskraft wirkt.

Die Vorrichtung 10 weist mindestens eine erste Steuerung 36 auf, die mit der technischen Anlage 12 gekoppelt ist. Im vorliegenden Ausführungsbeispiel ist die erste Steuerung 36 als eine modulare Steuerung ausgebildet, die ein Eingangsmodul 38 mit einem Eingang 40, ein Ausgangsmodul 42 mit einem Ausgang 44 sowie ein Verarbeitungsmodul 46 mit einer Verarbeitungseinheit 48 aufweist. Die Module können, wie hier gezeigt, zu einer Einheit zusammengesetzt sein, die typischerweise in einem Schaltschrank untergebracht ist. Die einzelnen Module der Steuerung 36 können aber auch im Feld in der Nähe zu der technischen Anlage 12 verteilt und über einen Kommunikationskanal verbunden sein. Die erste Steuerung 36 kann neben der im folgenden beschriebenen Überwachung auch weitere Steuerungsaufgaben der technischen Anlage 12 wahrnehmen, die jedoch einfachheitshalber hier nicht berücksichtigt sind.

Die erste Steuerung 36 dient in dem hier dargestellten Ausführungsbeispiel in erster Linie der Überwachung einer Bremsleistung der Bremse 14. Der Eingang 40 des Eingangsmoduls 38 ist mit einem Geber 50 verbunden, der an der Antriebswelle 24 angeordnet ist, und die Drehbewegung 32 der Antriebswelle 24 überwacht. Der Geber 50 kann ein Drehgeber sein, der Positionsdaten der Antriebswelle 24 in Form von Winkelpositionen bereitstellt und über den Eingang 40 der ersten Steuerung 36 zuführt. Beispielsweise kann der Geber 50 jede Millisekunde eine Winkelposition ermitteln und bereitstellen. Die erste Steuerung 36 liest die Werte der Winkelpositionen kontinuierlich ein und die Verarbeitungseinheit 48 berechnet hieraus eine Geschwindigkeit (1. Ableitung) sowie eine Beschleunigung (2. Ableitung) der Antriebswelle 24.

Aus der ermittelten Beschleunigung trifft die Verarbeitungseinheit 48, wie nachfolgend noch näher erläutert, eine Aussage über die gegenwärtige, tatsächliche Bremsleistung der Bremse 14. Fällt die ermittelte Bremsleistung unter einen definierten Schwellwert ab, erzeugt die Verarbeitungseinheit 48 ein Fehlersignal, basierend auf dem der Ausgang 44 geschaltet wird. Der Ausgang 44 ist mit dem Antrieb 22 gekoppelt, um diesen bei Vorliegen des Fehlersignals stillzusetzen. Beispielsweise ist der Ausgang 44 mit einem Schütz 52 verbunden, der in einer Stromzuführung 54 des Antriebs 22 angeordnet ist. Ausschließlich dann, wenn der Schütz 52 aufgrund eines Signals am Ausgang 44 geschaltet ist, wird der Antrieb 22 mit einem Betriebsstrom der Stromzuführung 54 versorgt. Über den Ausgang 44 und den Schütz 52 kann der Antrieb 22 somit gestoppt und ein erneuter Anlauf des Antriebs 22 zuverlässig unterbunden werden. Der Antrieb 22 ist nach Abfallen des Schützes 52 sicherheitstechnisch verriegelt. Es versteht sich jedoch, dass die sicherheitstechnische Verriegelung auch auf andere Weise erfolgen kann.

Die Verarbeitungseinheit 48 trifft eine Aussage über die gegenwärtige Bremsleistung der Bremse 14, indem es die ermittelte Beschleunigung, insbesondere deren zeitlichen Verlauf, betrachtet und kontinuierlich mit einem Grenzwert abgleicht. Beispielsweise kann die Verarbeitungseinheit 48 eine Beschleunigung über einen definierten Zeitraum betrachten (Bremsrampe), einen Durchschnittswert der Beschleunigung über diesen Zeitraum ermitteln und diesen mit einem hinterlegten Grenzwert für eine minimale Bremsrampe vergleichen. Der definierte Zeitraum ist ein Zeitraum, in dem die Bremse 14 mit maximaler Bremskraft die Antriebswelle 24 verzögert. In verschiedenen Ausführungsbeispielen ist der definierte Zeitraum, der Zeitraum in dem eine negative Beschleunigung der Antriebswelle gemessen werden kann. In anderen Ausführungsbeispielen kann der definierte Zeitraum auch anderweitig festgelegt oder durch eine weitere Einrichtung aktiv der Verarbeitungseinheit 48 signalisiert werden. Ermittelt die Verarbeitungseinheit 48 auf diese Weise eine verminderte Bremsleistung, löst sie die oben genannte sicherheitstechnische Verriegelung des Antriebs 22 aus.

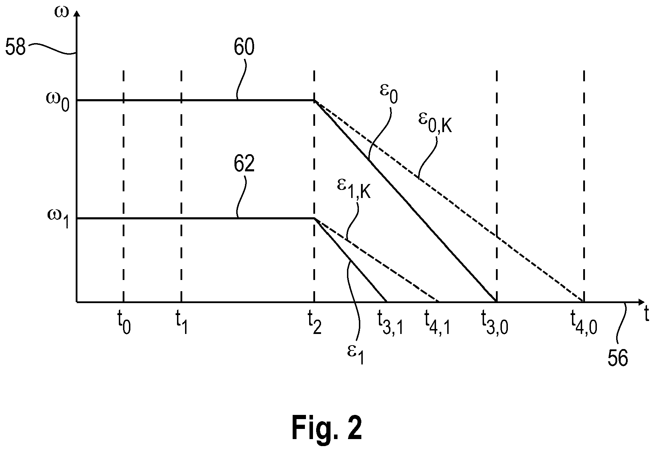

Fig. 2 zeigt exemplarisch eine Geschwindigkeits-Zeit-Kurve eines Bremsvorgangs der technischen Anlage 12. Auf der Abszissenachse 56 ist die Zeit t aufgetragen und auf der Ordinatenachse 58 die Winkelgeschwindigkeit ω. In dem Diagramm sind ein erster und ein zweiter Bremsvorgang jeweils durch einen Kurvenverlauf angedeutet. Der erste Kurvenlauf 60 zeigt einen Bremsvorgang bei einer hohen ersten Ausgangsgeschwindigkeit wo und der zweite Kurvenverlauf 62 zeigt einen Bremsvorgang bei einer zweiten Ausgangsgeschwindigkeit ω₁, die geringer ist als die erste Ausgangsgeschwindigkeit ω₀.

Die Geschwindigkeiten w₀ und ω₁ der Antriebswelle 24 sind zunächst konstant. Zu einem Zeitpunkt t₀ wird der technischen Anlage 12 ein Signal zum Anhalten der Presse zugeführt, woraufhin die technische Anlage 12 zum Zeitpunkt t₁ ein Ventil der Bremse 14 abschaltet. Hat das Ventil die Bremse gelöst, beginnt der tatsächliche Bremsvorgang zum Zeitpunkt t₂. Im Falle der ersten Ausgangsgeschwindigkeit wo stoppt die technische Anlage 12 ihre Bewegung zum Zeitpunkt t_{3,0}. Im Falle der zweiten Ausgangsgeschwindigkeit ω₁ stoppt die technische Anlage 12 ihre Bewegung zum Zeitpunkt t_{3,1}. Der Kurvenverlauf des tatsächlichen Bremsvorgangs vom Zeitpunkt t₂ bis zum Zeitpunkt t_{3.0} bzw. t_{3,1} beschreibt jeweils eine Bremsrampe ε₀ und ε₁, die sich aufgrund der angezogenen Bremse 14 in den beiden Fällen einstellen. Unabhängig von der Ausgangsgeschwindigkeit sind die jeweiligen Steigungen der Bremsrampen ε₀ und ε₁ bei der Verwendung derselben Bremse 14 identisch. Lediglich die tatsächlichen Stopp-Zeiten t_{3.0} bzw. t_{3.1} unterscheiden sich.

Unter der Annahme, dass beim Bremsvorgang die Bremse 14 mit ihrer maximalen Bremskraft wirkt, entspricht die Steigung der Bremsrampen ε₀ und ε₁ unmittelbar der tatsächlichen Bremsleistung der Bremse 14, wobei die Bremsleistung unabhängig von der Ausgangsgeschwindigkeit in den beiden Fällen gleich groß ist.

Mit den gestrichelten Linien sind hier ferner zwei Bremsrampen ε_{0,k} und ε_{1,k} mit geringerer Steigung dargestellt, die einer kritischen Bremsleistung in dem jeweiligen Fall entsprechen. Unterschreitet eine Steigung einer gemessenen Bremsrampe die Steigung der kritischen Bremsrampe, ist die technische Anlage 12 sicherheitstechnisch zu verriegeln, bis die Bremse 14 gewartet oder ausgetauscht worden ist und die Bremse wieder zu einer Bremsrampe mit größere Steigung führt. Als Sicherheitsgrenzwert kann folglich ein Wert für die Steigung einer minimalen Bremsrampe herangezogen und mit einer tatsächlichen Steigung einer gemessen Bremsrampe verglichen werden, um die sicherheitstechnische Verriegelung zu bewirken. Die sicherheitstechnische Verriegelung ist somit unmittelbar abhängig von einer tatsächlichen Bremsleistung der Bremse 14.

Da die Steigungen der zwei kritischen Bremsrampen ε_{0,k} und ε_{1,k} identisch sind, erfolgt eine sicherheitstechnische Verriegelung in den beiden Fällen dann, wenn die Bremse eine definierte Bremskraft unterschreitet. D.h., auch beim Betrieb der technischen Anlage 12 mit verminderter Ausgangsgeschwindigkeit ω₁ erfolgt eine sicherheitstechnische Verriegelung dann, wenn die Bremsleistung um einen definierten Grad vermindert ist, selbst wenn eine Nachlaufzeit (t_{4,1}) bei geringer Ausgangsgeschwindigkeit ω₁ noch keinen kritischen Wert überschritten hat wie es vergleichsweise bei hoher Ausgangsgeschwindigkeit w₀ der Fall gewesen wäre (t_{4,0}). Damit ist eine sicherheitstechnische Verrieglung korrekterweise an die tatsächliche Bremsleistung gekoppelt und nicht an einen daraus abgeleiteten Wert, der ggf. zu einem anderen Abschaltverhalten führen würde.

Die Überwachung der Bremsleistung gemäß der vorgeschlagenen Vorgehensweise ist, wie auch bei bekannten Nachlaufüberwachungen, eine Grenzwerterkennung, wobei als Sicherheitsgrenzwert nicht auf einen Nachlaufwinkel, sondern eine minimale Bremsrampe abgestellt wird. Da bei sehr hohen Winkelgeschwindigkeiten eine fehlersichere Grenzwerterkennung nicht unmittelbar durch eine redundante Verarbeitung der eingelesenen Winkelpositionen erreicht werden kann, kann eine zweite Steuerung 64 (Fig. 1) vorgesehen sein, die dazu eingerichtet ist, die Grenzwerterkennung der ersten Steuerung 36 fehlersicher zu überwachen. Die zweite Steuerung 64 kann beispielsweise zyklische Tests der Grenzwerterkennung durch die erste Steuerung 36 durchführen.

Die zweite Steuerung 64 ist insbesondere eine Sicherheitssteuerung, die für eine fehlersichere Aufnahme, Auswertung und Ausgabe von Steuerungs- und/oder Prozessdaten ausgelegt ist. Die zweite Steuerung 64 kann beispielsweise zweikanalig ausgebildet sein mit fehlersicheren Einrichtungen, die eine redundante Verarbeitung in zwei getrennten Verarbeitungskanälen ermöglichen, sowie mit Testeinrichtungen die die beiden Kanäle kontinuierlich abgleichen. Mittels der zweiten Steuerung 64 kann ein dedizierter Test auf die Funktionsfähigkeit der Grenzwerterkennung der ersten Steuerung 36 durchgeführt werden.

Für einen solchen Test kann die zweite Steuerung 64 mit der ersten Steuerung 36 über ein Eingabe-/Ausgabemodul 66 gekoppelt sein, und der ersten Steuerung 36 ein Testsignal senden, welches in der ersten Steuerung 36 dazu führt, dass die Grenzwerterkennung auf eine definierte Weise "manipuliert" wird. Beispielsweise kann die erste Steuerung 36 bei Anliegen des Testsignals den hinterlegten Grenzwert rechentechnisch verschieben, sodass die erste Steuerung 36 den hinterlegten Grenzwert interpretiert, als sei er überschritten worden, und als Reaktion hierauf auf einen Ausgang wirkt. Die zweite Steuerung 64 kann mit diesem Ausgang verbunden sein und überprüfen, ob die erste Steuerung 36 wie erwartet reagiert. Sollte der Test fehlschlagen, kann die zweite Steuerung 64 über ein eigenes Ausgangsmodul 68 auf die technische Anlage 12 einwirken. Hierfür kann die zweite Steuerung 64 in einem Ausführungsbeispiel auf dieselben Einrichtungen zurückgreifen (Schütz 52) wie die erste Steuerung 36.

Der Aufbau mit zwei getrennten Steuerungen 36, 64 hat den Vorteil, dass die jeweilige Steuerung für ihre jeweilige Aufgabe entsprechend hergerichtet sein kann. So kann beispielsweise die erste Steuerung 36 mit einer schnellen Verarbeitungseinheit 48 ausgestattet sein, die auch bei hohen Geschwindigkeiten der technischen Anlage 12 die für die Überwachung wesentlichen Werte präzise bestimmen kann. Die zweite Steuerung 64 kann wiederum für die Ausführung von fehlersicheren Tests hergerichtet sein und hierfür auf langsamere Verarbeitungseinheiten 70A, 70B zurückgreifen, die eine parallele und redundante Ausführung und Auswertung der Tests ermöglichen. Auf diese Weise muss eine schnelle Standardsteuerung nicht um sicherheitsrelevante Einrichtungen ergänzt werden bzw. eine vorhandene Sicherheitssteuerung nicht mit schnelleren Verarbeitungseinheiten ausgerüstet werden.

In einer Weiterbildung kann die erste Steuerung 36 und/oder die zweite Steuerung 64, sofern vorhanden, weitere Parameter der technischen Anlage 12 bestimmen und überwachen. Bei den weiteren Parametern kann es sich beispielsweise um die Signallaufzeit eines Stoppsignals (in Figur 2 der zeitliche Abstand zwischen t₀ und t₁) oder eine Schaltzeit eines Bremsventils (in Figur 2 der zeitliche Abstand zwischen t₁ und t₂) handeln. Anhand dieser Werte ist es möglich, eine Gesamtanhaltezeit zu bestimmen. Diese kann wiederum für eine weitergehende sicherheitstechnische Betrachtung herangezogen werden.

Denkbar ist auch, dass die erste Steuerung 36 eine Differenz zwischen dem hinterlegten Grenzwert und einem tatsächlich gemessenen Wert bestimmt und zur weiteren Verarbeitung zur Verfügung stellt. Basierend auf der Differenz kann beispielsweise eine Verschleißanzeige realisiert werden, bspw. in Form einer Anzeige auf einem Display oder in Form einer Meldung an eine übergeordnete Steuerung. Die Verschleißanzeige kann dazu verwendet werden, die Bremse 14 zu warten oder auszutauschen, bevor die Bremsleistung der Bremse 14 unter ein sicherheitskritisches Niveau fällt und zu einem unvorhergesehenen Stopp der technischen Anlage 12 führt.

Die vorgeschlagene Vorrichtung 10 kann, insbesondere bei der Auslegung mit zwei Steuerungen, dazu verwendet werden, eine normgerechte Bremsleistungsüberwachung eigenständig, auch für eine sehr hohe Sicherheitskategorie, zu realisieren. Denkbar ist jedoch auch, dass die vorgeschlagene Vorrichtung 10 eine bisherige Überwachung, die auf einem Nachlauf basiert, ergänzt, um eine Überwachung insgesamt zu verbessern.

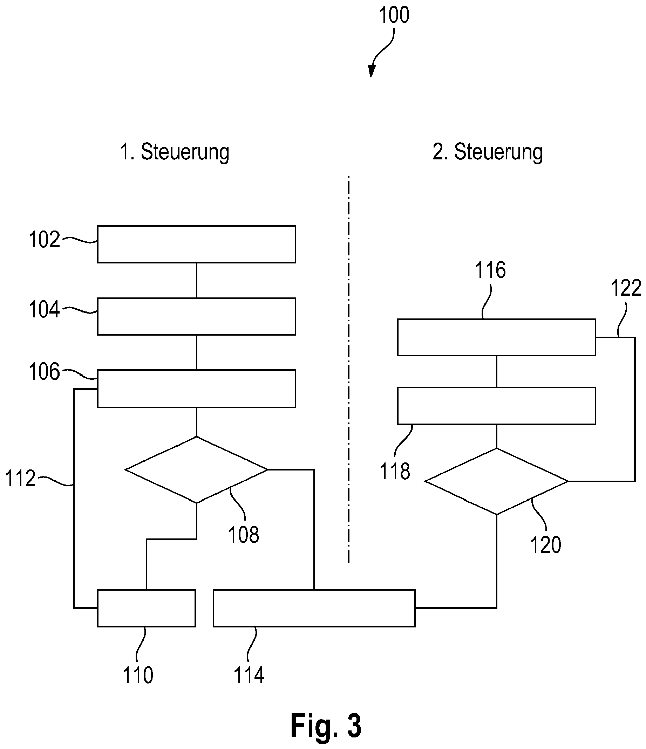

Fig. 3 zeigt abschließend ein Ablaufdiagramm eines Ausführungsbeispiels eines Verfahrens zur Bremsleistungsüberwachung gemäß der vorliegenden Offenbarung. Das Verfahren ist hier in seiner Gesamtheit mit der Bezugsziffer 100 bezeichnet und kann auf einer Vorrichtung 10, wie sie vorstehend beschriebenen wurde, ausgeführt werden.

Das Verfahren beginnt mit der Bereitstellung einer ersten Steuerung mit einem Eingang zum Aufnehmen eines Gebersignals eines mit einer Antriebswelle eines Antriebs gekoppelten Gebers und mit einem Ausgang zum Bereitstellen eines Fehlersignals, insbesondere eines Abschaltsignals, zum Stillsetzen des Antriebs (102).

Anschließend folgt eine zyklische Überwachung eines Grenzwerts. Hierfür nimmt die erste Steuerung ein Gebersignal des Gebers entgegen, vorzugsweise eine Winkelposition jede Millisekunde oder weniger (104).

Aus den kontinuierlich erfassten Winkelpositionen bestimmt die erste Steuerung einen Wert für die Beschleunigung der Antriebswelle 24 und leitet hieraus einen Wert für die gegenwärtige Bremsleistung ab (106). Wie zuvor erläutert, kann die bestimmte Beschleunigung unmittelbar den Wert der gegenwärtigen Bremsleistung repräsentieren.

Anschließend vergleicht die erste Steuerung den Wert für die gegenwärtige Bremsleistung mit einem in der ersten Steuerung hinterlegten Grenzwert für eine minimale Bremsleistung (108). Ist die gemessene Bremsleistung größer als die minimale Bremsleistung zeigt die erste Steuerung dies an (110), bspw. durch ein Freigabesignal, und fährt mit dem Abgleich der erfassten Bremsleistung mit der minimalen Bremsleistung fort (112). Ist die gemessene Bremsleistung geringer als die minimale Bremsleistung, löst die erste Steuerung eine sicherheitstechnische Verriegelung der technischen Anlage 12 aus (114).

In einem Ausführungsbeispiel kann die erste Steuerung im Schritt 110 ein Freigabesignal ausgeben und dessen Bereitstellung im Schritt 112 unterbinden, um die jeweils gewünschte Reaktion auszulösen.

In einem nebenläufigen Prozess kann in einer bevorzugten Ausgestaltung ein kontinuierlicher Test der Grenzwerterkennung des Schritts 108 erfolgen. Hierfür kann eine zweite Steuerung ein Testsignal an die erste Steuerung senden (116), woraufhin die Grenzwerterkennung (108) in einer definierten Weise "manipuliert" wird, sodass die erste Steuerung ein Überschreiten des Grenzwerts interpretiert. Die zweite Steuerung erfasst eine Reaktion der ersten Steuerung auf das Testsignal (118) und gleicht diese mit einer hinterlegten Erwartung ab (120). Verhält sich die erste Steuerung wie erwartet, pausiert die zweite Steuerung und startet den Test nach Ablauf eines Testintervalls erneut (122). Weicht die Reaktion hingegen von einer erwarteten Reaktion ab, löst die zweite Steuerung die sicherheitstechnische Verriegelung der technischen Anlage 12 aus (114).

Es versteht sich, dass die Darstellung des Verfahrens exemplarisch ist und weitere Schritte vor, zwischen oder am Ende das Verfahren ergänzt werden können. Ferner ist zu beachten, dass Elemente der offengelegten Vorrichtungen und Systeme durch entsprechende Hardware- und/oder Softwareelemente, z. B. geeignete Schaltungen, implementiert werden können. Eine Schaltung ist eine strukturelle Anordnung elektronischer Komponenten, einschließlich herkömmlicher Schaltungselemente, integrierter Schaltungen, einschließlich anwendungsspezifischer integrierter Schaltungen, integrierter Standardschaltungen, anwendungsspezifischer Standardprodukte und feldprogrammierbarer Gate-Arrays. Darüber hinaus kann eine Schaltung Zentraleinheiten, Grafikverarbeitungseinheiten und Mikroprozessoren beinhalten, die entsprechend einem Softwarecode programmiert oder konfiguriert werden. Eine Schaltung ist hierbei keine reine Software, obwohl eine Schaltung die oben beschriebene Hardware beinhaltet, die Software ausführt.

Die vorstehenden Ausführungsbeispiele sind lediglich als Beispiele aufzufassen, die den Schutzbereich nicht einschränken. Der Schutzbereich ist lediglich durch die nachfolgenden Ansprüche definiert.

## Patentansprüche

1. Vorrichtung (10) zur Bremsleistungsüberwachung und sicherheitstechnischen Verriegelung, insbesondere Abschaltung, eines Antriebs (22) einer technischen Anlage (12) mit zwei zueinander beweglichen Maschinenteilen (16, 18), die durch den Antrieb (22) in einem definierten Betätigungsintervall aufeinander zubewegt werden, aufweisend:
eine erste Steuerung (36) mit einem Eingang (40) zum Aufnehmen eines Gebersignals eines mit einer Antriebswelle (24) des Antriebs (22) gekoppelten Gebers (50) und mit einem Ausgang (44) zum Bereitstellen eines Fehlersignals, insbesondere eines Abschaltsignals zum Stillsetzen des Antriebs,
wobei die erste Steuerung (36) dazu eingerichtet ist, aus dem Gebersignal einen Wert für eine Beschleunigung zu bestimmen, wenn eine mit der Antriebswelle (24) gekoppelte Bremse (14) mit ihrer größtmöglichen Bremskraft auf die Antriebswelle (24) des Antriebs (22) wirkt, sowie den Antrieb (22) sicherheitstechnisch zu verriegeln, wenn der bestimmte Wert einen in der ersten Steuerung (36) hinterlegten Grenzwert passiert.

2. Vorrichtung nach Anspruch 1, wobei die erste Steuerung (36) ferner eingerichtet ist, einen Wert für eine Differenz zwischen dem bestimmten Wert für die Beschleunigung und dem hinterlegten Grenzwert zu bestimmen und den Wert für die Differenz bereitzustellen.

3. Vorrichtung nach Anspruch 1 oder 2, wobei die erste Steuerung (36) dazu eingerichtet ist, einen oder mehrere weitere Parameter der technischen Anlage (12) oder der ersten Steuerung (36) zu bestimmen, um eine Gesamtanhaltezeit zu ermitteln.

4. Vorrichtung nach Anspruch 3, wobei ein Parameter eine Signallaufzeit eines Stoppsignals oder eine Schaltzeit eines Bremsventils ist.

5. Vorrichtung nach einem der Ansprüche 1 bis 4, wobei die Vorrichtung eine zweite Steuerung (64) aufweist, die mit der ersten Steuerung (36) koppelbar ist, um eine oder mehrere Maßnahmen zur Fehlererkennung durchzuführen.

6. Vorrichtung nach Anspruch 5, wobei die eine oder mehreren Maßnahmen zur Fehlererkennung mindestens einen zyklischen Test einer Grenzwerterkennung der ersten Steuerung (36) beinhalten.

7. Vorrichtung nach Anspruch 6, wobei die zweite Steuerung (64) dazu eingerichtet ist, zyklisch ein Signal an die erste Steuerung (36) zu senden, worauf die erste Steuerung (36) den hinterlegten Grenzwert durch eine definierte Rechenvorschrift so verändert, dass die erste Steuerung (36) eine Überschreitung des Grenzwerts annimmt.

8. Vorrichtung nach einem der Ansprüche 1 bis 7, wobei die zweite Steuerung (64) mehrkanalig, redundant ausgebildet ist, insbesondere mit zwei zueinander redundanten Verarbeitungseinheiten (70A, 70B), die zwei unabhängige Verarbeitungskanäle bereitstellen.

9. Vorrichtung nach einem der Ansprüche 1 bis 8, wobei die erste Steuerung (36) dazu eingerichtet ist, jede Millisekunde oder weniger, mindestens eine Winkelposition der Antriebswelle (24) als Gebersignal zu erfassen.

10. Vorrichtung nach einem der Ansprüche 1 bis 9, wobei die erste Steuerung (36) eine Standardsteuerung ist, die das Gebersignal einkanalig verarbeitet.

11. Verfahren (100) zur Bremsleistungsüberwachung und sicherheitstechnischen Verriegelung, insbesondere Abschaltung, eines Antriebs (22) einer technischen Anlage (12) mit zwei zueinander beweglichen Maschinenteilen (16, 18), die durch den Antrieb (22) in einem definierten Betätigungsintervall aufeinander zubewegt werden, aufweisend:
- Aufnehmen eines Gebersignals eines mit einer Antriebswelle (24) des Antriebs (22) gekoppelten Gebers (50) an einem Eingang (38) einer ersten Steuerung (36);
- Bereitstellen eines Fehlersignals, insbesondere eines Abschaltsignals zum Stillsetzen des Antriebs (22), an einem Ausgang (44) der ersten Steuerung (36) in Abhängigkeit einer Verarbeitung des Gebersignals durch die erste Steuerung (36),
wobei die erste Steuerung (36) aus dem Gebersignal einen Wert für eine Beschleunigung bestimmt, wenn eine mit der Antriebswelle (24) gekoppelte Bremse (14) mit ihrer größtmöglichen Bremskraft auf die Antriebswelle (24) des Antriebs (22) wirkt, sowie den Antrieb (22) sicherheitstechnisch verriegelt, wenn der bestimmte Wert einen in der ersten Steuerung (36) hinterlegten Grenzwert passiert.
